# EUROPEAN PATENT APPLICATION

(11) **EP 4 343 801 A1**
(43) Date of publication of application: **27.03.2024**
(21) Application number: 22804762.7
(22) Date of filing: 19.05.2022
(51) Int. Cl.: H01G 11/78, H01G 9/00, H01G 9/12, H01M 50/103, H01M 50/105, H01M 50/107, H01M 50/119, H01M 50/121, H01M 50/129, H01M 50/184, H01M 50/317

(54) **WATER-IMPERMEABLE DEGASSING FILM FOR POWER STORAGE DEVICE**

(30) Priority: 19.05.2021 JP 2021084981
(71) Applicant: DAI NIPPON PRINTING CO., LTD., Tokyo 162-8001 (JP)
(72) Inventor: SASAKI, Miho, Tokyo 162-8001 (JP)
(74) Representative: Müller-Boré & Partner Patentanwälte PartG mbB
(86) International application number: PCT/JP2022/020888
(87) International publication number: WO 2022/244853

(57) **Abstract**

Provided is a water-impermeable degassing film for a power storage device which can be easily attached to the exterior material of a power storage device and makes it possible to discharge gas generated in the interior of the power storage device. The water-impermeable degassing film is made to adhere to the exterior material of a power storage device so as to block a communication section provided to the exterior material and is used to discharge gas generated in the interior of the power storage device from the communication section. The water-impermeable degassing film is configured from a laminate comprising at least a substrate layer and an adhesive layer, and the adhesive layer of the water-impermeable degassing film is made to adhere to the surface of the power storage device.

## Description

### TECHNICAL FIELD

The present disclosure relates to a water-impermeable degassing film for an electrical storage device.

### BACKGROUND ART

Various types of electrical storage devices have been developed heretofore, and in every electrical storage device, an exterior material is an essential member for sealing electrical storage device elements such as an electrode and an electrolyte.

As exterior materials, metallic exterior materials have been often used heretofore.

In recent years, a laminated sheet in which a base material layer, a barrier layer and a heat-sealable resin layer are laminated in this order has been proposed as an exterior material which is easily processed into diversified shapes and enables achievement of thickness reduction and weight reduction. When such a laminated film-shaped exterior material is used, an electrical storage device element is sealed with the exterior material by heat-sealing the peripheral edge portion of the exterior material while the heat-sealable resin layers located at the innermost layer of the exterior material face each other.

### PRIOR ART DOCUMENTS

### PATENT DOCUMENTS

Patent Document 1: Japanese Patent Laid-open Publication No. 2016-31934
Patent Document 2: Japanese Patent Laid-open Publication No. 2010-153841

### SUMMARY OF THE INVENTION

### PROBLEMS TO BE SOLVED BY THE INVENTION

For example, Patent Document 1 discloses a battery in which a battery element is housed in a pouch. A valve structure having a check valve is attached to a heat-sealing portion formed along a peripheral edge of the pouch. The check valve is configured to be actuated and perform degassing if the internal pressure of the pouch increases to a pressure equal to or greater than a certain level.

Patent Document 2 discloses a battery in which a battery element is housed in a box-shaped laminated container. In this laminated container, a portion that is more easily peeled than other portions (hereinafter, referred to as an "easy peeling portion") is formed in a flange-shaped heat-sealing portion formed along a peripheral edge of the laminated container. If the internal pressure of the laminated container increases to a pressure equal to or greater than a certain level, the easy peeling portion is peeled to perform degassing through a hole formed at the center of the easy peeling portion. Unlike the check valve in Patent Literature 1, the easy peeling portion is a fracture valve that does not return to its original state once peeled.

A main object of the present disclosure is to provide a water-impermeable degassing film for an electrical storage device which is easily attached to an exterior material of an electrical storage device and enables discharge of gas generated inside the electrical storage device.

### MEANS FOR SOLVING THE PROBLEMS

The inventor of the present disclosure has extensively conducted studies for solving the above-described problems. As a result, it has been found that when in a configuration in which a water-impermeable degassing film is bonded to a surface of an exterior material of an electrical storage device so as to block a communication portion provided in the exterior material, and gas generated inside the electrical storage device is discharged from the communication portion, the water-impermeable degassing film includes a laminate including at least a base material layer and an adhesive layer, and is used by bonding the adhesive layer of the water-impermeable degassing film to the surface of the electrical storage device, the water-impermeable degassing film is easily attached to the exterior material of the electrical storage device, and gas generated inside the electrical storage device can be discharged.

The inventor of the present disclosure has also found that when in a configuration in which a water-impermeable degassing film is disposed so as to be interposed between weld portions of an exterior material of an electrical storage device, and gas generated inside the electrical storage device is discharged, the water-impermeable degassing film includes a laminate including at least a base material layer and an adhesive layer, the adhesive layer of the water-impermeable degassing film is bonded to the weld portion of the exterior material, and gas generated inside the electrical storage device is discharged such that the gas passes through the water-impermeable degassing film in a thickness direction thereof, the water-impermeable degassing film is easily attached to the exterior material of the electrical storage device, and gas generated inside the electrical storage device can be discharged.

The present disclosure has been completed by further conducting studies based on the above-mentioned findings.

That is, the present disclosure provides the inventions of first and second aspects described below.

The invention of the first aspect of the present disclosure is a water-impermeable degassing film which is bonded to a surface of an exterior material of an electrical storage device so as to block a communication portion provided in the exterior material, and is used to discharge gas generated inside the electrical storage device from the communication portion, in which the water-impermeable degassing film includes a laminate including at least a base material layer and an adhesive layer, and the adhesive layer of the water-impermeable degassing film is bonded to the surface of the electrical storage device.

The invention of the second aspect of the present disclosure is a water-impermeable degassing film which is disposed so as to be interposed between weld portions of an exterior material of an electrical storage device, and is used to discharge gas generated inside the electrical storage device, in which the water-impermeable degassing film includes a laminate including at least a base material layer and an adhesive layer, the adhesive layer, of the water-impermeable degassing film is bonded to the weld portions of the exterior material, and the gas is discharged by passing through the water-impermeable degassing film in a thickness direction thereof.

### ADVANTAGES OF THE INVENTION

According to the present disclosure, it is possible to provide a water-impermeable degassing film for an electrical storage device which is easily attached to an exterior material of an electrical storage device and enables discharge of gas generated inside the electrical storage device.

### BRIEF DESCRIPTION OF THE DRAWINGS

Fig. 1 is a schematic view of an example in which a water-impermeable degassing film according to a first aspect of the present disclosure is applied to a surface of an exterior material (rectangular metal can) of an electrical storage device.
Fig. 2 is a schematic view of an example in which the water-impermeable degassing film according to the first aspect of the present disclosure is applied to a surface of an exterior material (rectangular metal can) of an electrical storage device.
Fig. 3 is a schematic view of an example in which the water-impermeable degassing film according to the first aspect of the present disclosure is applied to a surface of an exterior material (cylindrical metal can) of an electrical storage device.
Fig. 4 is a schematic view of an example in which the water-impermeable degassing film according to the first aspect of the present disclosure is applied to a surface of an exterior material (cylindrical metal can) of an electrical storage device.
Fig. 5 is a schematic view of an example in which the water-impermeable degassing film according to the first aspect of the present disclosure is applied to a surface of an exterior material (laminated film) of an electrical storage device.
Fig. 6 is a schematic view of an example in which the water-impermeable degassing film according to the first aspect of the present disclosure is applied to a surface of an exterior material (laminated film) of an electrical storage device.
Fig. 7 is a schematic view of an example in which the water-impermeable degassing film according to the first aspect of the present disclosure is applied to a weld portion of an exterior material (laminated film) of an electrical storage device.
Fig. 8 is a schematic sectional view taken along line A-A' in Fig. 7.
Fig. 9 is an enlarged view of a region IX in Fig. 8.
Fig. 10 is a schematic view of an example in which a water-impermeable degassing film according to a second aspect of the present disclosure is applied to a weld portion of an exterior material (laminated film) of an electrical storage device.
Fig. 11 is a schematic sectional view taken along line A-A' in Fig. 10.
Fig. 12 is an enlarged view of a region XII in Fig. 11.
Fig. 13 is a schematic sectional view of a water-impermeable degassing film having a shape in which two water-impermeable degassing films are superposed, heat-sealed only at an end part, and folded.
Fig. 14 is a schematic view of an example in which the water-impermeable degassing film according to the second aspect of the present disclosure is applied to a weld portion of an exterior material (laminated film) of an electrical storage device.
Fig. 15 is a schematic sectional view taken along line A-A' in Fig. 14.
Fig. 16 is an enlarged view of a region XVI in Fig. 15.
Fig. 17 is a schematic view of an example in which the water-impermeable degassing film according to the second aspect of the present disclosure is applied to a weld portion of an exterior material (laminated film) of an electrical storage device.
Fig. 18 is a schematic sectional view taken along line A-A' in Fig. 17.
Fig. 19 is an enlarged view of a region XIX in Fig. 18.
Fig. 20 is a schematic sectional view of a water-impermeable degassing film of the present disclosure.
Fig. 21 is a schematic sectional view of a water-impermeable degassing film of the present disclosure.
Fig. 22 is a schematic sectional view of a water-impermeable degassing film of the present disclosure.
Fig. 23 is a schematic sectional view of an exterior material including a laminated film.

### EMBODIMENTS OF THE INVENTION

A first aspect of the present disclosure provides a water-impermeable degassing film which is bonded to a surface of an exterior material of an electrical storage device so as to block a communication portion provided in the exterior material, and is used to discharge gas generated inside the electrical storage device from the communication portion, in which the water-impermeable degassing film includes a laminate including at least a base material layer and an adhesive layer, and the adhesive layer of the water-impermeable degassing film is bonded to the surface of the electrical storage device. The above-mentioned configuration of the water-impermeable degassing film according to the first aspect facilitates attachment of the electrical storage device to the exterior material, and enables discharge of gas generated inside the electrical storage device.

A second aspect of the present disclosure provides a water-impermeable degassing film which is disposed so as to be interposed between weld portions of an exterior material of an electrical storage device, and is used to discharge gas generated inside the electrical storage device, in which the water-impermeable degassing film includes a laminate including at least a base material layer and an adhesive layer, the adhesive layer of the water-impermeable degassing film is bonded to the weld portions of the exterior material, and the gas is discharged by passing through the water-impermeable degassing film in a thickness direction thereof. The above-mentioned configuration of the water-impermeable degassing film according to the second aspect facilitates attachment of the electrical storage device to the exterior material, and enables discharge of gas generated inside the electrical storage device.

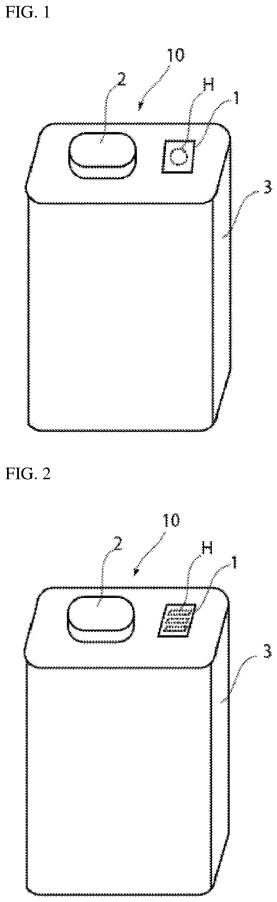

Hereinafter, the water-impermeable degassing films according to the first and second aspects of the present disclosure will be described in detail with reference to Figs. 1 to 23.

For the numerical range in this specification, a numerical range indicated by the term "A to B" means "A or more" and "B or less". For example, the expression of "2 to 15 mm" means 2 mm or more and 15 mm or less.

Each of the water-impermeable degassing films of the first and second aspects of the present disclosure is an adhesive film used for an electrical storage device. First, in each of the first and second aspects, a method of use of the water-impermeable degassing film of the present disclosure for an electrical storage device will be described in detail, followed by detailed description of a laminated configuration of the water-impermeable degassing film, characteristics, physical properties and the like of resins used for the layers.

The water-impermeable degassing film according to the first aspect of the present disclosure is bonded to a surface of an exterior material of an electrical storage device so as to block a communication portion provided in the exterior material, and is used to discharge gas generated inside the electrical storage device from the communication portion. In the water-impermeable degassing film according to the first aspect of the present disclosure, the adhesive layer is bonded to a surface of the electrical storage device, and the water-impermeable degassing film is bonded to a surface of the exterior material of the electrical storage device so as to block a communication portion provided in the exterior material.

For example, as shown in the schematic views of Figs. 1 to 9, a water-impermeable degassing film 1 according to the first aspect of the present invention is bonded to a surface of an exterior material 3 of an electrical storage device 10 so as to block a communication portion H provided in the exterior material 3. The gas generated inside the electrical storage device 10 (electrical storage device element 4) is discharged from the communication portion H by passing through the water-impermeable degassing film 1. That is, the communication portion H leads to the outside from the electrical storage device element 4, and by the water-impermeable degassing film 1, ingress of moisture from the outside of the electrical storage device 10 is suppressed, and the gas generated inside the electrical storage device 10 (electrical storage device element 4) is discharged to the outside.

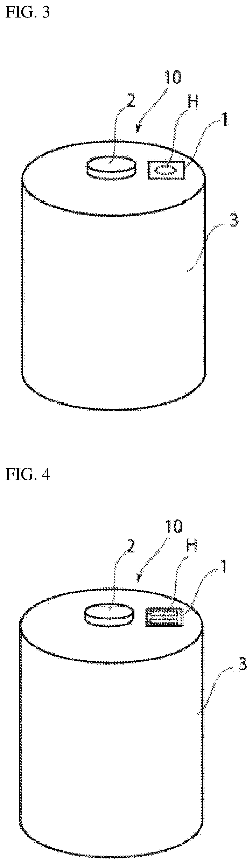

Figs. 1 and 2 show an aspect in which the exterior material 3 of the electrical storage device 10 includes a rectangular metal can. Figs. 3 and 4 show an aspect in which the exterior material 3 of the electrical storage device 10 includes a cylindrical metal can.

In the electrical storage device of Figs. 1 to 4, a surface of the exterior material 3 to which the water-impermeable degassing film 1 is bonded is formed of metal. That is, in the first aspect, when the water-impermeable degassing film 1 is applied to the exterior material 3 including a metal can, the adhesive layer 12 of the water-impermeable degassing film 1 can be formed from a resin which is impermeable to water and permeable to gas, and has bondability to a metal forming the outer surface of the exterior material 3.

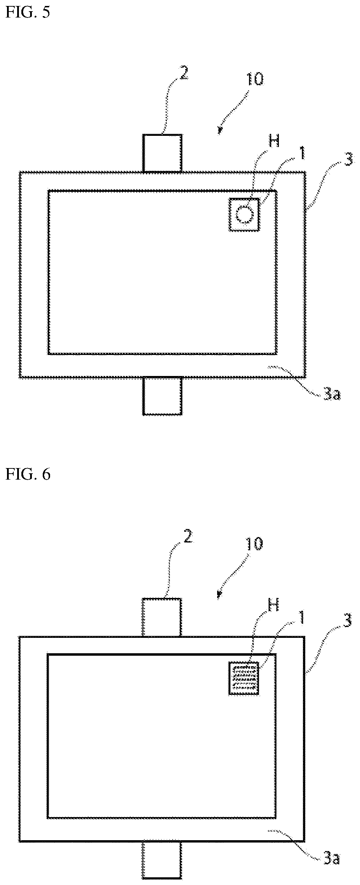

Figs. 5 to 9 show an aspect in which the exterior material 3 of the electrical storage device 10 includes a laminate (laminated film) including at least a base material layer 31, a barrier layer 33 and a heat-sealable resin layer 35 in this order.

In the electrical storage device of Figs. 5 to 9, a surface of the exterior material 3 to which the water-impermeable degassing film 1 is bonded is formed of resin. That is, in the first aspect, when the water-impermeable degassing film 1 is applied to the exterior material 3 including a laminated film, the adhesive layer 12 of the water-impermeable degassing film 1 can be formed from a resin which is impermeable to water and permeable to gas, and has bondability to a resin forming the outer surface of the exterior material.

In the first aspect, the shape (shape in plan view) of the communication portion H provided in the exterior material 3 is not particularly limited. For example, Figs. 1, 3 and 5 show a configuration in which the communication portion H has a circular shape, and Figs. 2, 4 and 6 show a configuration in which the communication portion H has a slit shape.

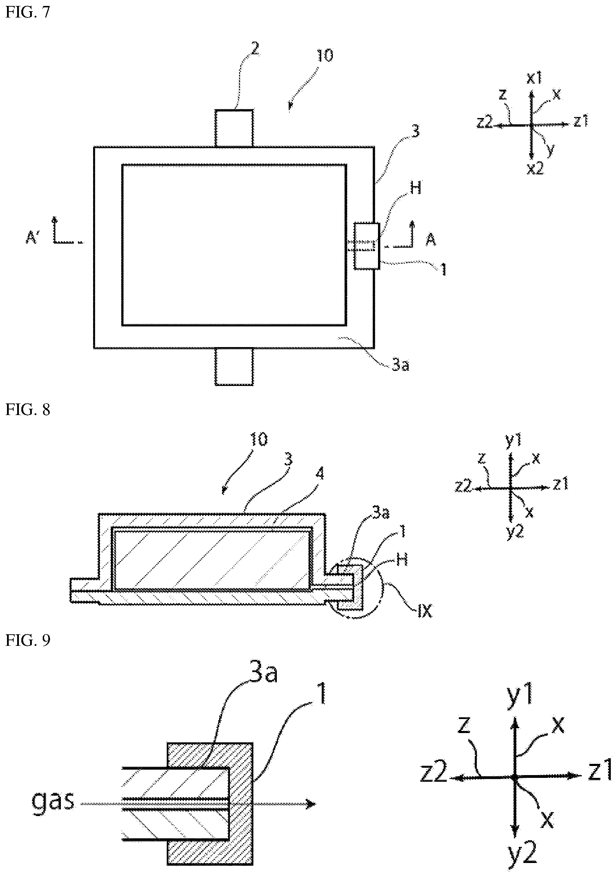

The location where the communication portion H is provided is not particularly limited, and the communication portion H can be provided on a bottom surface, a side surface, a weld portion, or the like of the electrical storage device 10. For example, Figs. 1 to 6 shown an aspect in which the communication portion H is provided on the bottom surface (which may also be referred to as an upper surface, a lower surface a top surface or the like) of the electrical storage device 10. For example, Figs. 7 to 9 show an aspect in which the communication portion H is provided in a weld portion (a weld portion between the heat-sealable resin layers 35 formed in a peripheral edge portion 3a of the exterior material 3, which will be described later) of the electrical storage device 10. As shown in Figs. 7 to 9, when the communication portion H is provided in the weld portion of the electrical storage device 10, a non-weld portion can be formed as the communication portion H in a part of the weld portion between the heat-sealable resin layers 35 which is formed in the peripheral edge portion 3a of the exterior material 3.

In the first aspect, the water-impermeable degassing film 1 is bonded to a surface of the electrical storage device 10 such that gas generated inside the electrical storage device 10 passes through the communication portion H to reach the water-impermeable degassing film 1, and the gas passes through the water-impermeable degassing film 1 in a thickness direction thereof. In the thickness direction of the water-impermeable degassing film 1, gas can be pass through the water-impermeable degassing film 1 because the distance over which gas passes is short as described later. On the other hand, in a direction perpendicular to the thickness direction of the water-impermeable degassing film 1, gas hardly passes through the water-impermeable degassing film 1 because the distance over which the gas passes is long. Therefore, in the first aspect, it is important that gas is allowed to pass through the water-impermeable degassing film 1 in a thickness direction thereof by bonding the water-impermeable degassing film 1 to the surface of the exterior material 3 so as to block the communication portion H provided on the exterior material 3 of the electrical storage device 10.

For the aspect shown in Figs. 7 to 9, in which the communication portion H is provided in the weld portion (the later-described weld portion of the heat-sealable resin layer 35 which is formed on the peripheral edge portion 3a of the exterior material 3) of the electrical storage device 10, the water-impermeable degassing film 1 is bonded to the communication portion H provided in a part of the weld portion on the peripheral edge 3a of the exterior material 3, and gas generated in the electrical storage device 10 is discharged to the outside by passing through the water-impermeable degassing film 1 in a thickness direction thereof as shown in the enlarged view of Fig. 9. In the second aspect, it is preferable that in the weld portion of the water-impermeable degassing film 1, the water-impermeable degassing film 1 is disposed so as to be interposed between the weld portions such that the later-described heat-sealable resin layer 35 of the exterior material 3 and the adhesive layer 12 of the water-impermeable degassing film 1 are bonded to each other. The water-impermeable degassing film 1 is interposed between the weld portions, and a portion, where the heat-sealable resin layers 35 are not welded, is provided in a part of the weld portion, and can be used as the communication portion H. Alternatively, a portion, where the heat-sealable resin layer 35 is not provided, can be formed in a part of the exterior material 3, and used as the communication portion H.

Next, the water-impermeable degassing film according to the second aspect of the present disclosure is disposed so as to be interposed between the weld portions of the exterior material of the electrical storage device, and is used to discharge gas generated inside the electrical storage device. In the water-impermeable degassing film according to the second aspect of the present disclosure, the adhesive layer of the water-impermeable degassing film is bonded to the weld portion of the exterior material, and gas generated inside the electrical storage device is discharged to the outside by passing through the water-impermeable degassing film in a thickness direction thereof. For allowing gas to pass through the water-impermeable degassing film in a thickness direction thereof, in the water-impermeable degassing film according to the second aspect of the present disclosure, the water-impermeable degassing film is disposed so as to be interposed between the weld portions of the exterior material such that the opening of the communication portion of the exterior material is blocked in the thickness direction of the water-impermeable degassing film.

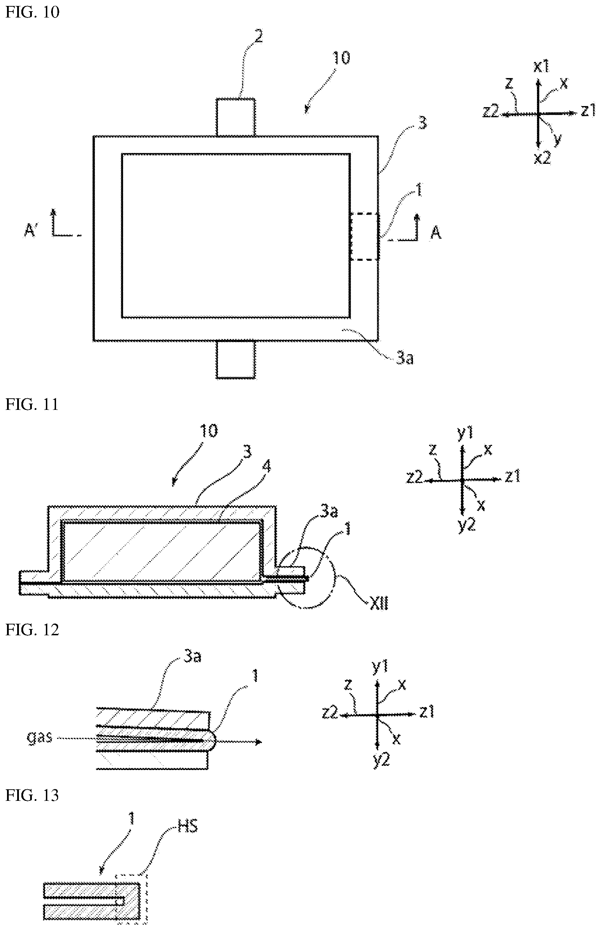

For example, as shown in schematic views of Figs. 10 to 12 and 14 to 19, the water-impermeable degassing film 1 of the second aspect is disposed so as to be interposed between the weld portions of the exterior material 3 of the electrical storage device 10. The gas generated inside the electrical storage device 10 (electrical storage device element 4) is discharged by passing through the water-impermeable degassing film 1. That is, the water-impermeable degassing film 1 disposed between the weld portions serves to block the communication portion that leads to the outside from the electrical storage device element 4, and by the water-impermeable degassing film 1, ingress of moisture from the outside of the electrical storage device 10 is suppressed, and the gas generated inside the electrical storage device 10 (electrical storage device element 4) is discharged to the outside.

In the schematic views of Figs. 10 to 12 and 14 to 19, in the weld portions of the exterior material 3 of the electrical storage device 10, the water-impermeable degassing film 1 is sandwiched in a folded shape between the weld portions of the exterior material 3. By forming the water-impermeable degassing film 1 into a bent shape with the adhesive layer 12 on the outer side and the base material layer 11 on the inner side, the adhesive layer 12 on the outer side and the heat-sealable resin layer 35 of the exterior material 3 can be bonded to each other.

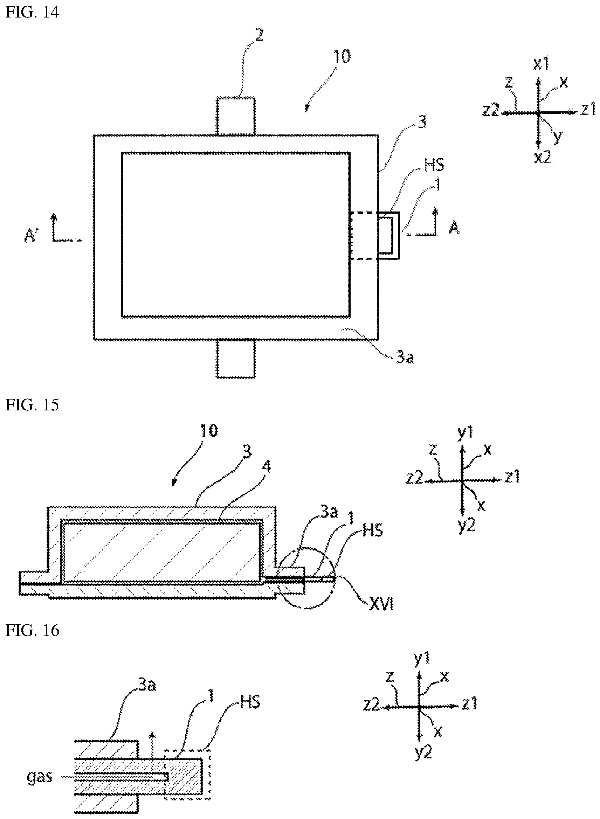

Examples of the method for forming the water-impermeable degassing film 1, which is disposed between the weld portions, into a folded shape, include a method in which the water-impermeable degassing film 1 is bent. Alternatively, the water-impermeable degassing film 1 may be formed into a shape in which as shown in, for example, the schematic views of Fig. 13, two water-impermeable degassing films are superposed, heat-sealed only at an end part (location of the heat-sealing portion HS in Fig. 13) and folded. Here, the two water-impermeable degassing films 1 may be heat-sealed before the water-impermeable degassing film 1 is disposed between the weld portions, or in formation of the weld portion of the exterior material 3, two water-impermeable degassing films may be disposed in a state of being superposed between the exterior materials 3, followed by heat-sealing of the water-impermeable degassing films 1 at an end part along with formation of the weld portion. If the area in which the two water-impermeable degassing films 1 are heat-sealed expands as in, for example, Fig. 16, gas hardly passes from the heat-sealed portion, and therefore it is desirable to make a design in which as in, for example, Figs. 14 to 16 described later, the water-impermeable degassing film 1 is disposed in the weld portion of the exterior material 3 so as to protrude a part of the water-impermeable degassing film 1 from the weld portion of the exterior material 3, so that the gas is discharged by passing through the water-impermeable degassing film in a thickness direction thereof.

Figs. 10 to 12 and 14 to 19 show an aspect in which the exterior material 3 of the electrical storage device 10 includes a laminate (laminated film) including at least a base material layer 31, a barrier layer 33 and a heat-sealable resin layer 35 in this order.

In the electrical storage device 10 in Figs. 10 to 12 and 14 to 19, the weld portion formed on the peripheral edge portion 3a of the exterior material 3 is formed of resin (for example, the heat-sealable resin layer 35 of the exterior material 3 described later). That is, in the second aspect, when the water-impermeable degassing film 1 is applied to the exterior material 3 including a laminated film, the water-impermeable degassing film 1 can be formed from a resin which is impermeable to water and permeable to gas, and has bondability to a resin forming the innermost layer of the exterior material (i.e., the heat-sealable resin layer 35 of the exterior material 3 described later).

In the second aspect, the water-impermeable degassing film 1 can also be disposed in the weld portion of the exterior material 3 so as to protrude a part of the water-impermeable degassing film 1 from the weld portion of the exterior material 3 as shown in Figs. 14 to 16. In the schematic views of Figs. 14 to 16, the portion where the water-impermeable degassing film 1 protrudes from the weld portion is heat-sealed at the peripheral edge and has a bag shape, and as shown in the schematic view of Fig. 16, the water-impermeable degassing film 1 is disposed such that the gas passes through the water-impermeable degassing film 1 in a thickness direction thereof. Figs. 14 to 16 show an example in which two water-impermeable degassing films 1 are laminated, and three sides (side on the x1 side, side on the x2 side, and side on the z1 side in Fig. 14) of the portion where the water-impermeable degassing film 1 protrudes from the weld portion are heat-sealed, but one water-impermeable degassing film 1 may be folded to obtain a shape in which two sides (side on the x1 side and side on the x2 side in Fig. 14) are heat-sealed (the z1 side is a folded portion).

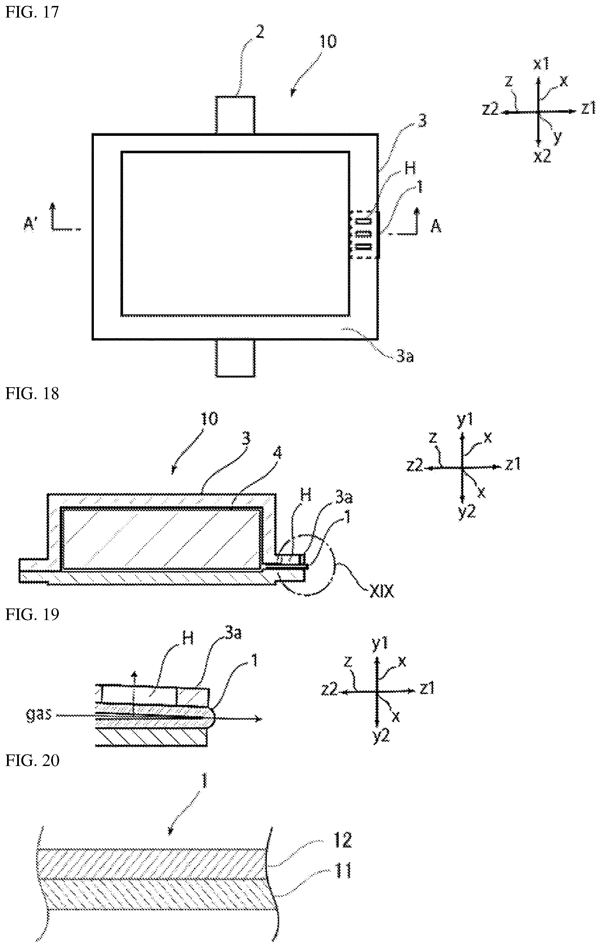

In the second aspect, a communication portion H through which a surface of the water-impermeable degassing film 1 is exposed can also be provided in the weld portion of the exterior material 3 as shown in Figs. 17 to 19. It is also possible to discharge gas through the communication portion H. As in the first aspect, the shape of the communication portion H (shape in plan view) is not particularly limited, and, may be, for example, a circular shape although Fig. 17 shows a configuration in which the communication portion H has a slit shape.

In the thickness direction of the water-impermeable degassing film 1, gas can be pass through the water-impermeable degassing film 1 because the distance over which gas passes is short as described in the first aspect. On the other hand, in a direction perpendicular to the thickness direction of the water-impermeable degassing film 1, gas hardly passes through the water-impermeable degassing film 1 because the distance over which the gas passes is long. Therefore, in the second aspect, it is also important that gas is allowed to pass through the water-impermeable degassing film 1 in a thickness direction thereof.

Next, the laminated configuration, resins, physical properties and the like of the water-impermeable degassing film of the present disclosure will be described in detail.

The water-impermeable degassing film 1 of the present disclosure includes a laminate including at least the base material layer 11 and the adhesive layer 12. Further, the water-impermeable degassing film 1 of the present disclosure has a function such that gas generated inside the electrical storage device passes through the water-impermeable degassing film 1 in a thickness direction thereof. The water-impermeable degassing film 1 is impermeable to water.

That is, the water-impermeable degassing film 1 of the present disclosure is required to be generally permeable to gas generated inside the electrical storage device (allows gas to pass through the water-impermeable degassing film 1 in a thickness thereof) and impermeable to water so that ingress of moisture from an environment outside the electrical storage device.

From the viewpoint of suitably exhibiting the effect of the present invention, the water-impermeable degassing film 1 of the present disclosure, which is left to stand in an environment at 60°C and 90% RH for 48 hours, has a water vapor permeability of preferably 10 cc/m²/day or less, more preferably 5 cc/m²/day or less, still more preferably 2 cc/m²/day or less, still more preferably 0 cc/m²/day. The method for measuring the water vapor permeability of the water-impermeable degassing film 1 is as follows.

### <Water vapor permeability>

The water vapor permeability is measured in an environment of 60°C and 90% RH in accordance with the provisions of JIS Z 0208, Cup Method. As a screw fastening type, a test piece is prepared by cutting a sample into 75 mmϕ, three holes of 5 mmϕ are made 5 mm inward from the outer periphery, and the test piece is set in a jig. A cup having a transmission area of 60 mmϕ is used.

From the viewpoint of suitably exhibiting the effects of the present invention, the water-impermeable degassing film 1 of the present disclosure has a carbon dioxide permeability of preferably 5,000 cm³/(m²·24h·atm) or more, more preferably 8,000 cm³/(m²·24h·atm) or more, still more preferably 10,000 cm³/(m²·24h·atm) or more. The upper limit of the carbon dioxide permeability of the water-impermeable degassing film 1 of the present disclosure is, for example, 100,000 cm³/(m²·24h·atm) or less. The method for measuring the carbon dioxide permeability of the water-impermeable degassing film 1 is as follows.

### <Carbon dioxide permeability>

In accordance with Test Items: Gas Permeability and Gas Permeation Coefficient provided in JIS K 7126-1: 2006 (differential-pressure method), the carbon dioxide permeability of the film is measured under the following conditions.
Detector: gas chromatograph (thermal conductivity detector (TDC))
Gas: carbon dioxide gas (CO₂) (humidified atmosphere)
Temperature and humidity: 60 ± 2°C and 50 ± 5% RH
Differential pressure: 1 atm (partial pressure in a state of 60°C and 50% RH (gas: 68.52 cmHg, water vapor: 7.48 cmHg)
Transmission area: 15.2 × 10⁻⁴ m² (transmission part diameter ϕ 4.4 × 10⁻² m)
Number of tests: n = 1
Measuring apparatus: differential pressure type gas/vapor permeability measuring apparatus

From the viewpoint of suitably exhibiting the effects of the present invention, the water-impermeable degassing film 1 of the present disclosure has an oxygen permeability of preferably 50 cm³/(m²·24h·atm) or more, more preferably 100 cm³/(m²·24h·atm) or more, still more preferably 200 cm³/(m²·24h·atm) or more. The upper limit of the oxygen permeability of the water-impermeable degassing film 1 of the present disclosure is, for example, 100,000 cm³/(m²·24h·atm) or less. The method for measuring the oxygen permeability of the water-impermeable degassing film 1 is as follows.

### < Oxygen permeability>

The oxygen permeability can be measured using an oxygen gas permeability measuring apparatus under the conditions of a temperature of 40°C and a humidity of 90% RH in accordance with JIS K 7126-2: 2006 (Plastic-Film and Sheet-Test Methods for Gas Permeability-Part 2: Equal Pressure Method, Appendix A: Test Methods for Oxygen Gas Permeability by Electrolytic Sensor Method). As the oxygen gas permeability measuring apparatus, for example, OXTRAN 2/22 manufactured by MOCON Corporation can be used. The water-impermeable degassing film is mounted in the apparatus such that a surface of the water-impermeable degassing film is in contact with oxygen gas, and the measurement is performed under the condition of a transmission area of 50 cm². The measurement is performed by the following procedure. First, carrier gas is supplied into the apparatus at a flow rate of 10 cc/min for 60 minutes or more to perform purge. As the carrier gas, nitrogen gas having a hydrogen content of about 5% may be used. After the purge, test gas is fed into the apparatus, and a time of 12 hours is spent as a time until an equilibrium state is attained after the start of the feeding of the test gas, and the measurement is then started under the above-described temperature and humidity conditions. Dry oxygen having an oxygen content of at least 99.5% (volume) is used as the test gas. At least three samples are measured for one condition, and the average of the measured values is taken as a value of the oxygen permeability for the condition.

For example, the polyolefin-based resin has a low water vapor permeability and a high carbon dioxide permeability, and is suitable as a resin for forming the water-impermeable degassing film 1 of the present disclosure. On the other hand, polyester, polyamide, polyurethane, polycarbonate, polyvinyl alcohol and the like have high water vapor permeability, and are not suitable as resins for forming the water-impermeable degassing film 1 of the present disclosure. In addition, polyester, polyamide, vinyl fluoride resins, AS resins (acrylonitrile styrene copolymers), polyacetal and the like have a low carbon dioxide gas permeability, and are not suitable as resins for forming the water-impermeable degassing film 1 of the present disclosure.

The water-impermeable degassing film 1 of the present disclosure has a configuration in which at least the base material layer 11 and the adhesive layer 12 are laminated, and the adhesive layer 12 forms one of the surfaces of the water-impermeable degassing film 1.

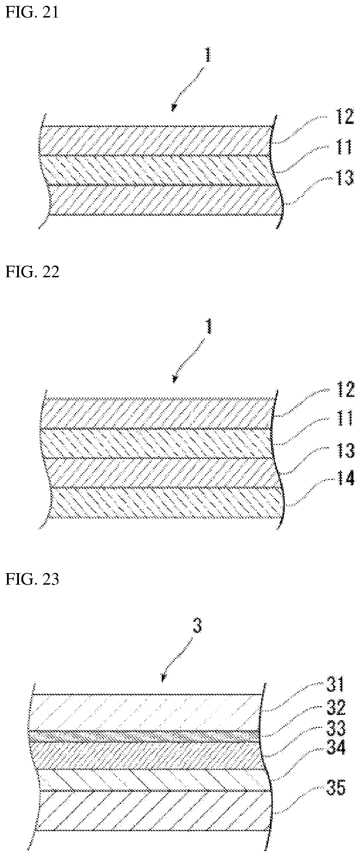

The water-impermeable degassing film 1 may further include at least one resin layer on a surface of the adhesive layer 12 on the base material layer 11 side. The resin layer is laminated between the adhesive layer 12 and the base material layer 11, or on a surface of the base material layer 11 on a side opposite to the adhesive layer 12. The resin layer is at least one layer. For example, Fig. 21 shows a laminated configuration in which one resin layer, i.e., a resin layer 13 is provided, and Fig. 22 shows a laminated configuration in which two resin layers, i.e. resin layers 13 and 14 are provided. Examples of the laminated configuration of the water-impermeable degassing film 1 of the present disclosure include a two-layered configuration, a three-layered configuration, a four-layered configuration, and a five-layered configuration. Of these, a two-layered configuration or a three-layered configuration is preferable.

Examples of the laminated configuration of the water-impermeable degassing film 1 of the present disclosure include a two-layered configuration in which the base material layer 11 and the adhesive layer 12 are laminated in this order (see Fig. 20); a three-layered configuration in which the adhesive layer 12, the base material layer 11 and the resin layer 13 are laminated in this order (see Fig. 21); and a four-layered configuration in which the adhesive layer 12, the base material layer 11, the resin layer 13 and the resin layer 14 are laminated in this order (see Fig. 22).

From the viewpoint of suitably exhibiting the effect of the present disclosure, the total thickness of the water-impermeable degassing film 1 of the present disclosure is, for example, about 5 µm or more, preferably about 20 µm or more, more preferably about 30 µm or more. The total thickness of the water-impermeable degassing film 1 of the present disclosure is, for example, about 500 µm or less, preferably 200 µm or less, more preferably about 180 µm. The total thickness of the water-impermeable degassing film 1 of the present disclosure is preferably in the range of about 5 to 500 µm, about 5 to 200 µm, about 5 to 180 µm, about 20 to 500 µm, about 20 to 200 µm, about 20 to 180 µm, about 30 to 500 µm, about 30 to 200 µm, or about 30 to 180 µm. As a more specific example, for example, the total thickness is preferably about 60 to 100 µm when the water-impermeable degassing film 1 of the present disclosure is used for consumer electrical storage devices, and the total thickness is preferably about 80 to 500 µm when the film 1 for metal terminal is used for vehicle-mounted electrical storage devices.

Hereinafter, materials for forming the base material layer 11, the adhesive layer 12, and the resin layer (for example, resin layers 13 and 14) provided if necessary in the water-impermeable degassing film 1 of the present disclosure, and thicknesses of these layers will be described in detail.

### [Base material layer 11]

In the water-impermeable degassing film 1 of the present disclosure, the base material layer 11 functions as a support.

It is preferable that the base material layer 11 is formed from a resin having a low water vapor permeability and a high carbon dioxide permeability.

The base material layer 11 is preferably a layer containing a polyolefin-based resin (i.e., having a polyolefin backbone), more preferably a layer formed of a polyolefin-based resin. Examples of the polyolefin-based resin include polyolefins such as polyethylene and polypropylene. The polyolefin-based resin may be a resin obtained by acid-modifying a polyolefin (acid-modified polyolefin). The acid-modified polyolefin is not particularly limited as long as it is a polyolefin modified with an acid, and a polyolefin graft-modified with an unsaturated carboxylic acid or an anhydride thereof is preferable. Examples thereof include acid-modified polyethylene and acid-modified polypropylene.

Examples of the polyolefin include polyethylene such as low-density polyethylene, medium-density polyethylene, high-density polyethylene and linear low-density polyethylene; crystalline or noncrystalline polypropylene such as homopolypropylene, block copolymers of polypropylene (e.g. block copolymers of propylene and ethylene) and random copolymers of polypropylene (e.g. random copolymers of propylene and ethylene); terpolymers of ethylene-butene-propylene; and the like. Among these polyolefins, polyethylene and polypropylene are preferred.

The polyolefin may be a cyclic polyolefin. The cyclic polyolefin is a copolymer of an olefin and a cyclic monomer, and examples of the olefin as a constituent monomer of the cyclic polyolefin include ethylene, propylene, 4-methyl-1-pentene, butadiene and isoprene. Examples of the cyclic monomer as a constituent monomer of the cyclic polyolefin include cyclic alkenes such as norbornene, specifically cyclic dienes such as cyclopentadiene, dicyclopentadiene, cyclohexadiene and norbornadiene. Among these polyolefins, cyclic alkenes are preferable, and norbornene is further preferable. Examples of the constituent monomer include styrene.

For the polyolefin that is acid-modified into an acid-modified polyolefin, the above-mentioned polyolefins are preferable. For example, the carboxylic acid-modified cyclic polyolefin is a polymer obtained by performing copolymerization with an α,β-unsaturated carboxylic acid or an anhydride thereof replacing a part of monomers that form the cyclic polyolefin, or by block-polymerizing or graft-polymerizing an α,β-unsaturated carboxylic acid or an anhydride thereof with the cyclic polyolefin.

Examples of the carboxylic acid or anhydride thereof which is used for acid modification include maleic acid, acrylic acid, itaconic acid, crotonic acid, maleic anhydride and itaconic anhydride. It is preferable that a peak derived from maleic anhydride is detected when the polyolefin-based resin is analyzed by infrared spectroscopy. For example, when a maleic anhydride-modified polyolefin is measured by infrared spectroscopy, peaks derived from maleic anhydride are detected near wavenumbers of 1760 cm⁻¹ and 1780 cm⁻¹. That is, in this case, when the polyolefin-based resin is measured by infrared spectroscopy, a peak derived from maleic anhydride is detected. However, if the degree of acid modification is low, the peaks may be too small to be detected. In that case, the peaks can be analyzed by nuclear magnetic resonance spectroscopy.

The base material layer 11 may be formed from one resin component alone, or may be formed from a blend polymer obtained by combining two or more resin components. From the viewpoint of the film formability of the base material layer 11, it is preferable to form the resin layer L from a blend polymer obtained by combining two or more resin components. When formed from the blend polymer, it is preferable that the base material layer 11 contains acid-modified polypropylene as a main component (the content of the component is 50 mass% or more), and other resins in an amount of 50 mass% or less (preferably polyethylene from the viewpoint of improving flexibility). On the other hand, from the viewpoint of enhancing the electrolytic solution resistance of the base material layer 11, it is preferable that the base material layer 11 contains polypropylene or acid-modified polypropylene alone as a resin.

In the water-impermeable degassing film 1 of the present disclosure, the base material layer 11 is preferably excellent in heat resistance from the viewpoint that the base material layer 11 suitably functions as a support (for example, from the viewpoint of suitably bonding the water-impermeable degassing film 1 to the exterior material 3).

For the base material layer 11 to have excellent heat resistance, the melting peak temperature of the resin for forming the base material layer 11 is preferably 100°C or higher, more preferably 120°C or higher, still more preferably 140°C or higher. The upper limit of the melting peak temperature of the resin for forming the base material layer 11 is, for example, 300°C or lower.

In the present disclosure, a method for measuring the melting peak temperature of the resin is as follows.

### <Measurement of melting peak temperature>

For each resin, the melting peak temperature is measured in accordance with the provisions of JIS K 7121: 2012 (Testing Methods for Transition Temperatures of Plastics (Amendment 1 of JIS K 7121: 1987)). The measurement is performed with a differential scanning calorimeter (for example, DSC, Differential Scanning Calorimeter Q200 manufactured by TA Instruments). The measurement sample is held at -50°C for 15 minutes, then heated from -50°C to 210°C at a temperature rise rate of 10°C/min to measure the first melting peak temperature P (°C), and then held at 210°C for 10 minutes. Next, the measurement sample is cooled from 210°C to -50°C at a temperature lowering rate of 10°C/min, and held for 15 minutes. Further, the second melting peak temperature Q (°C) is measured by heating the measurement sample from -50°C to 210°C at a temperature rise rate of 10°C/min. The flow rate of the nitrogen gas is set to 50 ml/min. In accordance with the above procedure, the first measured melting peak temperature P (°C) and the second measured melting peak temperature Q (°C) are determined, and the first measured melting peak temperature P is adopted as a melting peak temperature. When the measurement sample has a high melting peak temperature, the melting peak temperature may be measured by heating the sample from -50°C to 500°C at the same temperature rise rate.

From the viewpoint of more suitably exhibiting the effect of the present disclosure, the thickness of the base material layer 11 is preferably about 10 µm or more, more preferably about 20µm or more, still more preferably about 30 µm or more, and preferably about 300 µm or less, more preferably about 200 µm or less, still more preferably about 150 µm or less, and is preferably in the range of about 10 to 300 µm, about 10 to 200 µm, about 10 to 150 µm, about 20 to 300 µm, about 20 to 200 µm, about 20 to 150 µm, about 30 to 300 µm, about 30 to 200 µm, or about 30 to 150 µm.

In the present disclosure, from the viewpoint of more suitably exhibiting the effect of the present disclosure, the ratio of the thickness of the base material layer 11 to the total thickness of water-impermeable degassing film 1 (100%) is preferably about 5% or more, more preferably about 10% or more, still more preferably about 15% or more, and preferably about 95% or less, more preferably about 90% or less, still more preferably about 85% or less, and is preferably in the range of about 5 to 95%, about 5 to 90%, about 5 to 85%, about 10 to 95%, about 10 to 90%, about 10 to 85%, about 15 to 95%, about 15 to 90%, or about 15 to 85%.

### [Adhesive Layer 12]

In the water-impermeable degassing film 1 of the present disclosure, the adhesive layer 12 has bondability to the exterior material 3 of the electrical storage device 10. Specifically, in the first aspect, the adhesive layer has bondability to a surface of the exterior material 3, and in the second aspect, the adhesive layer has bondability (preferably is heat-sealable) to the weld portion of the exterior material 3.

As described above, in the first aspect, when the water-impermeable degassing film 1 is applied to the exterior material 3 including a metal can as shown in Figs. 1 to 4, the adhesive layer 12 of the water-impermeable degassing film 1 can be formed from a resin which is impermeable to water and permeable to gas, and has bondability (preferably is heat-sealable) to a metal forming the outer surface of the exterior material 3. In the first aspect, when the water-impermeable degassing film 1 is applied to the outer surface of the exterior material 3 including the laminated film can as shown in Figs. 5 to 9, the adhesive layer 12 of the water-impermeable degassing film 1 can be formed from a resin which is impermeable to water and permeable to gas, and has bondability (preferably is heat-sealable) to a resin forming the outer surface of the exterior material.

As described above, in the second aspect, when the water-impermeable degassing film 1 is applied to the exterior material 3 including a laminated film (a laminate including at least the base material layer 31, the barrier layer 33 and the heat-sealable resin layer 35 in this order) as in Figs. 10 to 12 and 14 to 19, the water-impermeable degassing film 1 can be formed from a resin which is impermeable to water and permeable to gas, and has bondability (preferably is heat-sealable) to a resin forming the innermost layer of the exterior material (i.e., the heat-sealable resin layer 35 of the exterior material 3 described later).

It is preferable that the adhesive layer 12 is formed from a resin having a low water vapor permeability and a high carbon dioxide permeability.

The adhesive layer 12 is preferably a layer containing a polyolefin-based resin (i.e., having a polyolefin backbone), more preferably a layer formed of a polyolefin-based resin. Examples of the polyolefin-based resin include polyolefins such as polyethylene and polypropylene. The polyolefin-based resin may be a resin obtained by acid-modifying a polyolefin (acid-modified polyolefin). The acid-modified polyolefin is not particularly limited as long as it is a polyolefin modified with an acid, and a polyolefin graft-modified with an unsaturated carboxylic acid or an anhydride thereof is preferable. Examples thereof include acid-modified polyethylene and acid-modified polypropylene.

Specific examples of the polyolefin-based resin in the adhesive layer 12 are the same as the polyolefins and acid-modified polyolefins exemplified for the base material layer 11, which are also cited here.

The adhesive layer 12 may be formed from one resin component alone, or may be formed from a blend polymer obtained by combining two or more resin components. From the viewpoint of the film formability of the adhesive layer 12, it is preferable to form the resin layer L from a blend polymer obtained by combining two or more resin components. When formed from the blend polymer, it is preferable that the adhesive layer 12 contains acid-modified polypropylene as a main component (the content of the component is 50 mass% or more), and other resins in an amount of 50 mass% or less (preferably polyethylene from the viewpoint of improving flexibility). On the other hand, from the viewpoint of enhancing the electrolytic solution resistance of the adhesive layer 12, it is preferable that the adhesive layer 12 contains polypropylene or acid-modified polypropylene alone as a resin.

The adhesive layer 12 may contain an adhering component. Examples of the adhering component include elastomers.

The elastomer is not particularly limited as long as it is blended together with a polyolefin to exhibit adhesion, and for example, an elastomer (thermoplastic elastomer) formed of a thermoplastic resin is preferable.

As the elastomer, styrene-based elastomers, olefin-based elastomers, acryl-based elastomers, silicone-based elastomers, urethane-based elastomers, polyester-based elastomers, polyamide-based elastomers, rubber-based elastomers and the like are preferable. The elastomers may be used alone, or may be used in combination of two or more thereof.

The type of styrene elastomer is not particularly limited, and specific examples thereof include styrene-butadiene-styrene block copolymers, styrene-isoprene-styrene block copolymers, styrene-ethylene-butylene-styrene block copolymers, and styrene-ethylene-propylene-styrene block copolymers.

Examples of the olefin-based elastomer include copolymers of α-olefins having 2 to 20 carbon atoms, such as ethylene, propylene, 1-butene, 1-hexene and 4-methylpentene, and for example, ethylene-propylene copolymers (EPR) and ethylene-propylene-diene copolymers (EPDM) are suitable. Examples thereof include copolymers of an α-olefin and a non-conjugated diene having 2 to 20 carbon atoms, such as dicyclopentadiene, 1,4-hexadiene, cyclooctadiene, methylene norbornene, ethylidene norbornene, butadiene or isoprene. Further, examples thereof include carboxy-modified nitrile rubber obtained by copolymerizing methacrylic acid with a butadiene-acrylonitrile copolymer.

The acryl-based elastomer contains an acrylic acid ester as a main component, and specifically, ethyl acrylate, butyl acrylate, methoxyethyl acrylate, ethoxyethyl acrylate and the like are suitably used. As the crosslinking point monomer, glycidyl methacrylate, allyl glycidyl ether, or the like is used. It is also possible to further copolymerize acrylonitrile and ethylene. Specific examples thereof include acrylonitrile-butyl acrylate copolymers, acrylonitrile-butyl acrylate-ethyl acrylate copolymers, and acrylonitrile-butyl acrylate-glycidyl methacrylate copolymers.

The silicone-based elastomer contains organopolysiloxane as a main component, and examples thereof include polydimethylsiloxane-based elastomers, polymethylphenylsiloxane-based elastomers, and polydiphenylsiloxane-based elastomers.

The urethane-based elastomer includes structural units of a hard segment including low-molecular-weight ethylene glycol and diisocyanate and a soft segment including high-molecular-weight (long-chain) diol and diisocyanate, and examples of the high-molecular-weight (long-chain) diol include polypropylene glycol, polytetramethylene oxide, poly (1,4-butylene adipate), poly (ethylene-1,4-butylene adipate), polycaprolactone, poly(1,6-hexylene carbonate), and poly(1,6-hexylene neopentylene adipate).

The polyester-based elastomer is obtained by polycondensation of a dicarboxylic acid or a derivative thereof and a diol compound or a derivative thereof. Specific examples of the dicarboxylic acid include aromatic dicarboxylic acids such as terephthalic acid, isophthalic acid, and naphthalenedicarboxylic acid, the same aromatic dicarboxylic acids as above except that a hydrogen atom of an aromatic nucleus is replaced with a methyl group, an ethyl group, a phenyl group or the like, aliphatic dicarboxylic acids having 2 to 20 carbon atoms, such as adipic acid, sebacic acid and dodecanedicarboxylic acid, and alicyclic dicarboxylic acids such as cyclohexanedicarboxylic acid. These compounds can be used alone, or used in combination of two or more thereof.

Specific examples of the diol compound include aliphatic diols and alicyclic diols such as ethylene glycol, 1,3-propanediol, 1,4-butanediol, 1,6-hexanediol, 1, 10 decanediol and 1,4-cyclohexanediol, and bisphenol A, bis-(4-hydroxyphenyl)-methane, bis-(4-hydroxy-3-methylphenyl)-propane, and resorcin. These compounds can be used alone, or used in combination of two or more thereof.

Examples of the polyamide-based elastomer include block copolymers containing polyamide as a hard segment component, and polybutadiene, a butadiene-acrylonitrile copolymer, a styrene-butadiene copolymer, polyisoprene, an ethylene-propylene copolymer, polyether, polyester, polybutadiene, polycarbonate, polyacrylate, polymethacrylate, polyurethane, silicone rubber or the like as a soft segment component.

Examples of the rubber-based elastomer include polyisobutylene.

Among the elastomers, styrene-based elastomers and olefin-based elastomers are preferable, and styrene-based elastomers are particularly preferable.

The proportion of the elastomers in the adhesive layer 12 is not particularly limited, and is preferably about 50 mass% or less, more preferably about 10 to 50 mass%, still more preferably about 10 to 40 mass%.

For the adhesive layer 12 to have an excellent heat-sealing property, the melting peak temperature of the resin for forming the adhesive layer 12 is preferably 300°C or lower, more preferably 200°C or lower, still more preferably 160°C or lower, and preferably 100°C or higher, more preferably 120°C or higher, still more preferably 140°C or higher, and is preferably in the range of about 100 to 300°C, about 100 to 200°C, about 100 to 160°C, about 120 to 300°C, about 120 to 200°C, about 120 to 160°C, about 140 to 300°C, about 140 to 200°C, or about 140 to 160 °C.

From the viewpoint of more suitably exhibiting the effect of the present disclosure, the thickness of the adhesive layer 12 is preferably about 10 µm or more, more preferably about 20µm or more, still more preferably about 30 µm or more, and preferably about 300 µm or less, more preferably about 200 µm or less, still more preferably about 150 µm or less, and is preferably in the range of about 10 to 300 µm, about 10 to 200 µm, about 10 to 150 µm, about 20 to 300 µm, about 20 to 200 µm, about 20 to 150 µm, about 30 to 300 µm, about 30 to 200 µm, or about 30 to 150 µm.

In the present disclosure, from the viewpoint of more suitably exhibiting the effect of the present disclosure, the ratio of the thickness of the adhesive layer 12 to the total thickness of water-impermeable degassing film 1 (100%) is preferably about 5% or more, more preferably about 10% or more, still more preferably about 15% or more, and preferably about 95% or less, more preferably about 90% or less, still more preferably about 85% or less, and is preferably in the range of about 5 to 95%, about 5 to 90%, about 5 to 85%, about 10 to 95%, about 10 to 90%, about 10 to 85%, about 15 to 95%, about 15 to 90%, or about 15 to 85%.

### [Resin layer (resin layer 13, resin layer 14, etc.)]

The water-impermeable degassing film 1 of the present disclosure has a multilayered structure, and includes the base material layer 11 and the adhesive layer 12, with at least one resin layer optionally provided on a surface of the adhesive layer 12 on the base material layer 11 side. The resin layer is laminated between the adhesive layer 12 and the base material layer 11, or on a surface of the base material layer 11 on a side opposite to the adhesive layer 12. The resin layer is at least one layer. For example, Fig. 21 shows a laminated configuration in which one resin layer, i.e., a resin layer 13 is provided, and Fig. 22 shows a laminated configuration in which two resin layers, i.e. resin layers 13 and 14 are provided.

It is preferable that the resin layer is formed from a resin having a low water vapor permeability and a high carbon dioxide permeability.

The resin layer is preferably a layer containing a polyolefin-based resin (i.e., having a polyolefin backbone), more preferably a layer formed of a polyolefin-based resin. Examples of the polyolefin-based resin include polyolefins such as polyethylene and polypropylene. The polyolefin-based resin may be a resin obtained by acid-modifying a polyolefin (acid-modified polyolefin). The acid-modified polyolefin is not particularly limited as long as it is a polyolefin modified with an acid, and a polyolefin graft-modified with an unsaturated carboxylic acid or an anhydride thereof is preferable. Examples thereof include acid-modified polyethylene and acid-modified polypropylene.

Specific examples of the polyolefin-based resin in the resin layer are the same as the polyolefins and acid-modified polyolefins exemplified for the base material layer 11, which are also cited here. Like the adhesive layer 12, the resin layer may contain an adhering component. Examples of the adhering component include elastomers, and specific examples thereof are the same as those for the adhesive layer 12, which are also cited here.

The melting peak temperature of the resin for forming the resin layer is preferably 350°C or lower, more preferably 300°C or lower, still more preferably 250°C or lower, and preferably 100°C or higher, more preferably 120°C or higher, still more preferably 140°C or higher.

When the water-impermeable degassing film 1 of the present disclosure includes resin layers, the thickness of each of the resin layers is preferably about 10 µm or more, more preferably about 20 µm or more, still more preferably about 30 µm or more, and preferably about 500 µm or less, more preferably about 300 µm or less, still more preferably about 200 µm or less from the viewpoint of more suitably exhibiting the effect of the present disclosure.

In the present disclosure, when the water-impermeable degassing film 1 of the present disclosure includes resin layers, the ratio of the thickness of each of the resin layers to the total thickness of water-impermeable degassing film 1 (100%) is preferably about 5% or more, more preferably about 10% or more, still more preferably about 15% or more, and preferably about 95% or less, more preferably about 90% or less, still more preferably about 85% or less, and is preferably in the range of about 5 to 95%, about 5 to 90%, about 5 to 85%, about 10 to 95%, about 10 to 90%, about 10 to 85%, about 15 to 95%, about 15 to 90%, or about 15 to 85%, from the viewpoint of more suitably exhibiting the effect of the present disclosure.

From the viewpoint of more suitably exhibiting the effect of the present disclosure, it is preferable that the water-impermeable degassing film 1 is substantially free of polyester, polyamide, polyurethane, polycarbonate, polyvinyl alcohol, a vinyl fluoride resin, an AS resin or polyacetal. The phrase "substantially free of these resins" means that the total proportion of these resins in the water-impermeable degassing film 1 is 5 mass% or less, 1 mass% or less, or 0 mass%. From the viewpoint of more suitably exhibiting the effect of the present disclosure, the proportion of polyolefin-based resins in resins forming the water-impermeable degassing film 1 is preferably 90 mass% or more, more preferably 95 mass% or more, still more preferably 98 mass% or more, still more preferably 100 mass%.

At least one of the layers forming the water-impermeable degassing film 1 of the present disclosure may each contain additives such as a colorant such as a pigment, a filler, and a slipping agent in addition to the resin.

### [Exterior material 3]

Examples of the exterior material 3 of the electrical storage device 10 include metal cans and laminated films. For example, Figs. 1 and 2 show an aspect in which the exterior material 3 of the electrical storage device 10 includes a rectangular metal can. Figs. 3 and 4 show an aspect in which the exterior material 3 of the electrical storage device 10 includes a cylindrical metal can. Figs. 5 to 12 and 14 to 19 show an aspect in which the exterior material 3 of the electrical storage device 10 includes a laminated film (for example, a laminate including at least the base material layer 31, the barrier layer 33 and the heat-sealable resin layer 35 in this order).

In addition to the exterior material 3, at least a terminal 2 is provided on the outer surface of the electrical storage device 10. The terminal 2 is a member for electrically connecting the inside and the outside of the electrical storage device 10 and extracting electricity from the electrical storage device 10.

When the exterior material is a metal can, the exterior material is formed of metal, and examples of the metal include stainless steel, aluminum alloys, and sheet steel.

Examples of the exterior material 3 including a laminated film include materials having a laminated structure including a laminate having at least the base material layer 31, the barrier layer 33 and the heat-sealable resin layer 35 in this order. Fig. 23 shows an aspect in which the base material layer 31, an adhesive agent layer 32 provided if necessary, the barrier layer 33, an adhesive layer 34 provided if necessary, and the heat-sealable resin layer 35 are laminated in the stated order as an example of a cross-sectional structure of the exterior material 3. In the exterior material 3, the base material layer 31 is on the outer layer side, and the heat-sealable resin layer 35 is an innermost layer. During construction of an electrical storage device, the heat-sealable resin layers 35 located on the peripheral edge of the electrical storage device element 4 is brought into contact with each other, and heat-sealed to seal the electrical storage device element 4, so that the electrical storage device element 4 is sealed. Figs. 5 to 12 and 14 to 19 show the electrical storage device 10 where the embossed-type exterior material 3 for electrical storage devices, which is molded by embossing molding, is used, but the exterior material 3 for electrical storage devices may be of non-molded pouch type. Examples of the pouch type include three-way seal, four-way seal and pillow type, and any of the types may be used.

The thickness of the laminate forming the exterior material 3 is not particularly limited, and is preferably about 190 µm or less, about 180 µm or less, about 160 µm or less, about 155 µm or less, about 140 µm or less, about 130 µm or less, or about 120 µm or less from the viewpoint of cost reduction, improvement of the energy density and the like, and preferably about 35 µm or more, about 45 µm or more, about 60 µm or more, or about 80 µm or more from the viewpoint of maintaining the function of the exterior material 3, which is protection of the electrical storage device element 4. For example, the thickness is preferably in the range of about 35 to 190 µm, about 35 to 180 µm, about 35 to 160 µm, about 35 to 155 µm, about 35 to 140 µm, about 35 to 130 µm, about 35 to 120 µm, about 45 to 190 µm, about 45 to 180 µm, about 45 to 160 µm, about 45 to 155 µm, about 45 to 140 µm, about 45 to 130 µm or more, about 45 to 120 µm, about 60 to 190 µm, about 60 to 180 µm, about 60 to 160 µm, about 60 to 155 µm, about 60 to 140 µm, about 60 to 130 µm, about 60 to 120 µm, about 80 to 190 µm, about 80 to 180 µm, about 80 to 160 µm, about 80 to 155 µm, about 80 to 140 µm, about 80 to 130 µm or about 80 to 120 µm.

The water-impermeable degassing film 1 of the present disclosure can be suitably applied to an exterior material for all-solid-state batteries, and the thickness of the laminate forming the exterior material for the all-solid-state battery is not particularly limited, and is preferably about 10,000 µm or less, about 8,000 µm or less, or about 5,000 µm or less from the viewpoint of cost reduction, improvement of the energy density and the like, and preferably about 100 µm or more, about 150 µm or more, or about 200 µm or more from the viewpoint of maintaining the function of the exterior material 3 for all-solid-state batteries, i.e., a function of protecting a battery element. The thickness of the laminate is preferably, in the range of, for example, about 100 to 10,000 µm, about 100 to 8,000 µm, about 100 to 5,000 µm, about 150 to 10,000 µm, about 150 to 8,000 µm, about 150 to 5,000 µm, about 200 to 10,000 µm, about 200 to 8,000 µm, or about 200 to 5,000 µm, and particularly preferably about 100 to 5,000 µm.

### (Base material layer 31)

In the exterior material 3, the base material layer 31 is a layer that functions as a base material of the exterior material, and forms the outermost layer side of the exterior material.

The material that forms the base material layer 31 is not particularly limited as long as it has an insulation quality. Examples of the material that forms the base material layer 31 include polyester, polyamide, epoxy, acrylic, fluororesins, polyurethane, silicone resins, phenol, polyetherimide, polyimide and mixtures and copolymers thereof. Polyester such as polyethylene terephthalate or polybutylene terephthalate has the advantage that it is excellent in electrolytic solution resistance, so that whitening etc. due to deposition of an electrolytic solution is hardly occurs, and thus the polyester is suitably used as a material for formation of the base material layer 31. In addition, a polyamide film is excellent in stretchability, can prevent occurrence of whitening due to resin breakage in the base material layer 31 during molding, and is thus suitably used as a material for formation of the base material layer 31.

The base material layer 31 may be formed of a uniaxially or biaxially stretched resin film, or may be formed of an unstretched resin film. Among them, a uniaxially or biaxially stretched resin film, particularly a biaxially stretched resin film has improved heat resistance through orientation and crystallization, and is therefore suitably used as the base material layer 31.

Among them, nylons and polyesters are preferable and biaxially stretched nylons and biaxially stretched polyesters are more preferable as resin films for formation of the base material layer 31. Since the all-solid-state battery has tolerance to a temperature of 150°C or higher, sealing is often performed at a high temperature of 200°C or higher, and biaxially stretched polyester is most suitable.

The base material layer 31 can also be laminated with a resin film which is made of a different material for improving pinhole resistance, and insulation quality as a packaging of an electrical storage device. Specific examples include a multi-layered structure in which a polyester film and a nylon film are laminated, and a multi-layered structure in which a biaxially stretched polyester and a biaxially stretched nylon are laminated. When the base material layer 31 is made to have a multi-layered structure, the resin films may be bonded with the use of an adhesive, or may be directly laminated without the use of an adhesive. Examples of the method for bonding the resin films without the use of an adhesive include methods in which the resin films are bonded in a heat-melted state, such as a co-extrusion method, a sand lamination method and a thermal lamination method. For sealing at a high temperature, it is desirable that at least the outermost layer be a biaxially stretched polyester.

In addition, the friction of the base material layer 31 may be reduced for improving moldability. When the friction of the base material layer 31 is reduced, the friction coefficient of the surface thereof is not particularly limited, and it is, for example, 1.0 or less. Examples of the method for reducing the friction of the base material layer 31 include matting treatment, formation of a thin film layer of a slipping agent, and a combination thereof.

The thickness of the base material layer 31 is, for example, about 10 to 50 µm, preferably about 15 to 30 µm.

### (Adhesive agent layer 32)

In the exterior material 3, the adhesive agent layer 32 is a layer disposed on the base material layer 31 if necessary for imparting adhesion to the base material layer 31. That is, the adhesive agent layer 32 is provided between the base material layer 31 and the barrier layer 33.

The adhesive agent layer 32 is formed from an adhesive capable of bonding the base material layer 31 and the barrier layer 33. The adhesive used for forming the adhesive agent layer 32 may be a two-liquid curable adhesive, or may be a one-liquid curable adhesive. In addition, the adhesion mechanism of the adhesive used for forming the adhesive agent layer 32 is not particularly limited, and may be any one of a chemical reaction type, a solvent volatilization type, a heat melting type, a heat pressing type and so on.

As resin components of adhesives that can be used for formation of the adhesive agent layer 32, polyurethane-based two-liquid curable adhesive agents; and polyamides, polyesters or blend resins of these resins and modified polyolefins are preferable because they are excellent in spreadability, durability and a yellowing inhibition action under high-humidity conditions, a thermal degradation inhibition action during heat-sealing, and so on, and effectively suppress occurrence of delamination by inhibiting a reduction in lamination strength between the base material layer 31 and the barrier layer 33.

The adhesive agent layer 32 may be made multilayered with different adhesive components. When the adhesive agent layer 32 is made multilayered with different components, it is preferable that a resin excellent in bondability to the base material layer 31 is selected as an adhesive component to be disposed on the base material layer 31 side, and an adhesive component excellent in bondability to the barrier layer 33 is selected as an adhesive component to be disposed on the barrier layer 33 side, from the viewpoint of improving lamination strength between the base material layer 31 and the barrier layer 33. When the adhesive agent layer 32 is made multilayered with different adhesive components, specific examples of the preferred adhesive component to be disposed on the barrier layer 33 side include acid-modified polyolefins, metal-modified polyolefins, mixed resins of polyesters and acid-modified polyolefins, and resins containing a copolymerization polyester.

The thickness of the adhesive agent layer 32 is, for example, about 2 to 50 µm, preferably about 3 to 25 µm.

### (Barrier Layer 33)

In the exterior material, the barrier layer 33 is a layer which is intended to improve the strength of the exterior material and which has a function of preventing ingress of water vapor, oxygen, light and the like into the electrical storage device. The barrier layer 33 is preferably a metal layer, i.e. a layer formed of a metal. Specific examples of the metal forming the barrier layer 33 include aluminum, stainless and titanium, with aluminum being preferred. The barrier layer 33 can be formed from, for example, a metal foil, a metal vapor-deposited film, an inorganic oxide vapor-deposited film, a carbon-containing inorganic oxide vapor-deposited film, a film provided with any of these vapor-deposited films, or the like, and is formed preferably from a metal foil, more preferably from an aluminum foil. From the viewpoint of preventing generation of wrinkles and pinholes in the barrier layer 33 during manufacturing of the exterior material, it is more preferred to form the barrier layer from a soft aluminum foil such as annealed aluminum (JIS H4160: 1994 A8021H-O, JIS H4160: 1994 A8079H-O, JIS H4000:2014 A8021P-O, JIS H4000:2014 A8079P-O).

The thickness of the barrier layer 33 is preferably about 10 to 200 µm, more preferably about 20 to 100 µm, from the viewpoint of making pinholes less likely to be generated by molding while thinning the exterior material.

In addition, at least one surface, preferably both surfaces, of the barrier layer 33 are subjected to a chemical conversion treatment for stabilization of bonding, prevention of dissolution and corrosion, and so on. Here, the chemical conversion treatment is a treatment for forming a corrosion-resistant film on the surface of the barrier layer.

### (Adhesive layer 34)

In the exterior material 3, the adhesive layer 34 is a layer provided between the barrier layer 33 and the heat-sealable resin layer 35 if necessary for firmly bonding the heat-sealable resin layer 35.

The adhesive layer 34 is formed from an adhesive capable of bonding the barrier layer 33 and the heat-sealable resin layer 35 to each other. The composition of the adhesive used for forming the adhesive layer is not particularly limited, and examples thereof include adhesives formed of a polyester polyol compound and an alicyclic isocyanate compound.

The thickness of the adhesive layer 34 is, for example, about 1 to 40 µm, preferably about 2 to 30 µm.

### (Heat-sealable resin layer 35)

In the exterior material 3, the heat-sealable resin layer 35 is a layer which corresponds to an innermost layer and performs a function of hermetically sealing the electrical storage device element by heat-sealing the heat-sealable resin layers to each other during construction of the electrical storage device.

The resin component to be used in the heat-sealable resin layer 35 is not particularly limited as long as it can be heat-sealed, and for the exterior material, examples thereof generally include polyolefins and cyclic polyolefins.

Specific examples of the polyolefin include polyethylene such as low-density polyethylene, medium-density polyethylene, high-density polyethylene and linear low-density polyethylene; crystalline or noncrystalline polypropylene such as homopolypropylene, block copolymers of polypropylene (e.g. block copolymers of propylene and ethylene) and random copolymers of polypropylene (e.g. random copolymers of propylene and ethylene); terpolymers of ethylene-butene-propylene; and the like. Among these polyolefins, polyethylene and polypropylene are preferred.

The cyclic polyolefin is a copolymer of an olefin and a cyclic monomer, and examples of the olefin as a constituent monomer of the cyclic polyolefin include ethylene, propylene, 4-methyl-1-pentene, butadiene and isoprene. Examples of the cyclic monomer as a constituent monomer of the cyclic polyolefin include cyclic alkenes such as norbornene, specifically cyclic dienes such as cyclopentadiene, dicyclopentadiene, cyclohexadiene and norbornadiene. Among these polyolefins, cyclic alkenes are preferable, and norbornene is further preferable. Examples of the constituent monomer include styrene.

Among these resin components, crystalline or noncrystalline polyolefins, cyclic polyolefins and blend polymers thereof are preferable, and polyethylene, polypropylene, copolymers of ethylene and norbornene, and blend polymers of two or more thereof are more preferable.

The heat-sealable resin layer 35 may be formed from one resin component alone, or may be formed from a blend polymer obtained by combining two or more resin components. Further, the heat-sealable resin layer 35 may be formed of only one layer, but may be formed of two or more layers with the same resin component or different resin components.

The thickness of the heat-sealable resin layer 35 is not particularly limited, and is, for example, about 2 to 2000 µm, preferably about 5 to 1000 µm, still more preferably about 10 to 500 µm.

As described above, it is desirable that the melting peak temperature of the heat-sealable resin layer 35 of the exterior material 3 be higher than 100°C, i.e., the lower limit of the melting peak temperature of the base material layer 11. The melting peak temperature of the heat-sealable resin layer 35 is preferably 150 to 250°C, more preferably 180 to 270°C, still more preferably 200 to 270°C, still more preferably 200 to 250°C. As described above, the melting peak temperature of the base material layer 11 is preferably lower by 5°C or more, more preferably lower by 10°C or more, still more preferably lower by 15°C or more than that of the melting peak temperature of the heat-sealable resin layer 35 of the exterior material 3, from the viewpoint of further suitably exhibiting the effect of the present disclosure.

Examples of the resin contained in the heat-sealable resin layer 35 of the exterior material for all-solid-state batteries include polyolefins such as polypropylene and polyethylene, acid-modified polyolefins such as acid-modified polypropylene and acid-modified polyethylene, and polybutylene terephthalate. Among them, polybutylene terephthalate is excellent in heat resistance, and therefore it is preferable that in the exterior material for all-solid-state batteries, the heat-sealable resin layer 35 is formed of a polybutylene terephthalate film. The heat-sealable resin layer 35 is formed of a polybutylene terephthalate film, and therefore is also excellent in adhesion to the base material layer 11 of the adhesive film of the present disclosure. The polybutylene terephthalate film that forms the heat-sealable resin layer 35 may be formed into the heat-sealable resin layer 35 by laminating a polybutylene terephthalate film prepared in advance with the adhesive layer 34, or may be formed into a film by melt-extruding a resin for forming the polybutylene terephthalate film and laminated with the adhesive layer 34.

The polybutylene terephthalate film may be a stretched polybutylene terephthalate film or an unstretched polybutylene terephthalate film, and is preferably an unstretched polybutylene terephthalate film.

It is preferable that the polybutylene terephthalate film contains an elastomer in addition to polybutylene terephthalate. The elastomer is one that serves to enhance the flexibility of the polybutylene terephthalate film while securing the durability of the polybutylene terephthalate film in a high-temperature environment. The elastomer is preferably at least one thermoplastic elastomer selected from polyester-based elastomers, polyamide-based elastomers, polyurethane-based elastomers, polyolefin-based elastomers, polystyrene-based elastomers, and polyether-based elastomers, or a thermoplastic elastomer which is a copolymer of any of the foregoing elastomers. In the polybutylene terephthalate film, the content of the elastomer is not particularly limited as long as the flexibility of the polybutylene terephthalate film can be enhanced while the durability of the polybutylene terephthalate film in a high-temperature environment is secured, and the content of the elastomer is, for example, about 0.1 mass% or more, preferably about 0.5 mass% or more, more preferably about 1.0 mass% or more, still more preferably about 3.0 mass% or more. The content is, for example, about 10.0 mass% or less, about 8.0 mass% or less, or about 5.0 mass% or less. The content is preferably in the range of about 0.1 to 10.0 mass%, about 0.1 to 8.0 mass%, about 0.1 to 5.0 mass%, about 0.5 to 10.0 mass%, about 0.5 to 8.0 mass%, about 0.5 to 5.0 mass%, about 1.0 to 10.0 mass%, about 1.0 to 8.0 mass%, about 1.0 to 5.0 mass%, about 3.0 to 10.0 mass%, about 3.0 to 8.0 mass%, or about 3.0 to 5.0 mass%.

The heat-sealable resin layer 35 may be composed of only one layer, or may be composed of two or more layers with the same resin component or different resin components. When the heat-sealable resin layer 35 is composed of two or more layers, at least one layer is preferably formed from a polybutylene terephthalate film, and the polybutylene terephthalate film is preferably an innermost layer of the exterior material for all-solid-state batteries. The layer bonded to the adhesive layer 34 is preferably a polybutylene terephthalate film. When the heat-sealable resin layer 35 is formed from two or more layers, the layer which is not formed from a polybutylene terephthalate film may be, for example, a layer formed from a polyolefin such as polypropylene or polyethylene, an acid-modified polyolefin such as acid-modified polypropylene or acid-modified polyethylene, or the like. However, since polyolefins and acid-modified polyolefins have lower durability in a high-temperature environment as compared to polybutylene terephthalate, it is preferable that the heat-sealable resin layer 35 includes only a polybutylene terephthalate film.

### Electrical storage device

The electrical storage device 10 of the present disclosure is an electrical storage device having a structure in which an electrical storage device element 4 is housed in a packaging formed of the exterior material 3.

In the first aspect, the water-impermeable degassing film 1 is bonded to a surface of an exterior material 3 of the electrical storage device 10 so as to block the communication portion H provided in the exterior material 3, and gas generated inside the electrical storage device 10 is discharged from the communication portion H. The diameter of a cross-section of the communication portion H (diameter of a cross-section of a gas flow path) can be appropriately set according to the size of the electrical storage device 10 or the like.

In the second aspect, the water-impermeable degassing film 1 is disposed so as to be interposed between the weld portions of the exterior material 3 of the electrical storage device 10, and gas generated inside the electrical storage device 10 is discharged through the water-impermeable degassing film 1 disposed in the weld portions. The diameter of a cross-section of the portion disposed between the weld portions (diameter of a cross-section of a gas flow path) can be appropriately set according to the size of the electrical storage device 10.

The water-impermeable degassing film 1 and the exterior material 3 are as described above.

For example, the exterior material 3 including a laminated film includes a laminate including at least the base material layer 31, the barrier layer 33 and the heat-sealable resin layer 35 in this order from the outside, and the heat-sealable resin layers 35 of the exterior material 3 are heat-sealed to house the electrical storage device element 4 in the packaging. In the second aspect, for example, the water-impermeable degassing film 1 is disposed so as to be interposed between the heat-sealable resin layers 35 at a location where the heat-sealable resin layers 35 are welded (heat-sealed). The electrical storage device 10 of the present disclosure can be manufactured by a method including a housing step of housing the electrical storage device element 4 in a packaging by disposing the water-impermeable degassing film 1 so as to interpose the water-impermeable degassing film 1 between the heat-sealable resin layers 35 at a location where the heat-sealable resin layers 35 of the exterior material 3 are heat-sealed, and heat-sealing the heat-sealable resin layers 35 with the water-impermeable degassing film 1 interposed therebetween. Here, the adhesive layer 12 of the water-impermeable degassing film is bonded to the weld portion of the exterior material 3, and gas is discharged by passing through the water-impermeable degassing film in a thickness direction thereof. A configuration is particularly preferable in which between the weld portions of the exterior material 3 of the electrical storage device 10, the water-impermeable degassing film 1 is sandwiched in a folded shape between the weld portions of the exterior material 3 as shown in Figs. 10 to 12 and 14 to 19.

The electrical storage device 10 of the present disclosure may be an electrical storage device such as a battery (including a condenser, a capacitor and the like). The electrical storage device 10 of the present disclosure may be either a primary battery or secondary battery, and is preferably a secondary battery. The type of the secondary battery is not particularly limited, and examples thereof include lithium ion batteries, lithium ion polymer batteries, all-solid-state batteries, lead storage batteries, nickel-hydrogen storage batteries, nickel-cadmium storage batteries, nickel-iron storage batteries, nickel-zinc storage batteries, silver oxide-zinc storage batteries, metal-air batteries, polyvalent cation batteries, condensers and capacitors. Among these secondary batteries, lithium ion batteries and lithium ion polymer batteries are suitable.

### EXAMPLES

Hereinafter, the present disclosure will be described in detail by way of examples and comparative examples. However, the present disclosure is not limited to the examples.

### <Manufacturing of adhesive film>

### Example 1

Using an extruder and a T-die casting apparatus, maleic anhydride-modified polypropylene as an adhesive layer was extruded to both surfaces of a polyarylate nonwoven fabric (areal weight: 14 g/m²) as a base material layer to obtain a water-impermeable degassing film (total thickness: 100 µm) having a three-layered configuration in which maleic anhydride-modified polypropylene (thickness: 42 µm), a polyarylate nonwoven fabric (areal weight: 14 g/m²) and maleic anhydride-modified polypropylene (thickness: 42 µm) were laminated in this order.

### Comparative Example 1

Using an extruder and a T-die casting apparatus, maleic anhydride-modified polypropylene was extruded to both surfaces of a polyethylene naphthalate film (thickness: 12 µm) to obtain a water-impermeable degassing film (total thickness: 100 µm) having a three-layered configuration in which maleic anhydride-modified polypropylene (thickness: 44 µm), a polyethylene naphthalate film (thickness: 12 µm) and maleic anhydride-modified polypropylene (thickness: 44 µm) were laminated in this order.

### Example 2

Using an extruder and a T-die casting apparatus, polypropylene and maleic anhydride-modified polypropylene as an adhesive layer were extruded to one surface and the other surface, respectively, of an unstretched polypropylene film (thickness: 95 µm) as a base material layer to obtain a water-impermeable degassing film (total thickness: 200 µm) having a three-layered configuration in which polypropylene (thickness: 52.5 µm), an unstretched polypropylene film (thickness: 95 µm) and maleic anhydride-modified polypropylene (thickness: 52.5 µm) were laminated in this order.

### Example 3

Using an extruder and a T-die casting apparatus, polypropylene and maleic anhydride-modified polypropylene were extruded to one surface and the other surface, respectively, of an unstretched polypropylene film (thickness: 50 µm) as a base material layer to obtain a water-impermeable degassing film (total thickness: 200 µm) having a three-layered configuration in which polypropylene (thickness: 50 µm), an unstretched polypropylene film (thickness: 50 µm) and maleic anhydride-modified polypropylene (thickness: 100 µm) were laminated in this order.

### Example 4

Using an extruder and a T-die casting apparatus, maleic anhydride-modified polypropylene as an adhesive layer and polypropylene as a base material layer were coextruded to obtain a water-impermeable degassing film (total thickness: 80 µm) having a two-layered configuration in which maleic anhydride-modified polypropylene (thickness: 40 µm) and polypropylene (thickness: 40 µm) were laminated.

### Example 5

Using an extruder and a T-die casting apparatus, maleic anhydride-modified polypropylene as an adhesive layer, polypropylene as a base material layer, and polypropylene were co-extruded to obtain a water-impermeable degassing film (total thickness: 80 µm) having a three-layered configuration in which maleic anhydride-modified polypropylene (thickness: 30 µm), polypropylene (thickness: 30 µm) and polypropylene (thickness: 20 µm) were laminated.

For each of the films obtained in examples and comparative examples, the water vapor permeability, the oxygen permeability and the carbon dioxide permeability were measured by the following methods. The results are shown in Table 1.

### <Water vapor permeability>

The water vapor permeability was measured in an environment of 60°C and 90% RH in accordance with the provisions of JIS Z 0208, Cup Method. A screw fastening type cup (transmission area: 60 mmϕ) was charged with an appropriate amount of calcium chloride (anhydrous). A test piece cut into 75 mmϕ and having three holes of 5 mmϕ made 5 mm inward from the outer periphery was set in a jig. The test piece was placed in an environment at 60°C and 90% RH, and taken out after 24 hours, 48 hours and 96 hours. The same test was conducted on three or more samples, and the average value for the samples was taken as a water vapor permeability.

### <Carbon dioxide permeability>

In accordance with Test Items: Gas Permeability and Gas Permeation Coefficient provided in JIS K 7126-1: 2006 (differential-pressure method), the carbon dioxide permeability of the film was measured under the following conditions.
Detector: gas chromatograph (thermal conductivity detector (TDC))
Gas: carbon dioxide gas (CO₂) (humidified atmosphere)
Temperature and humidity: 60 ± 2°C and 50 ± 5% RH
Differential pressure: 1 atm (partial pressure in a state of 60°C and 50% RH (gas: 68.52 cmHg, water vapor: 7.48 cmHg)
Transmission area: 15.2 × 10⁻⁴ m² (transmission part diameter ϕ 4.4 × 10⁻² m)
Number of tests: n = 1
Measuring apparatus: differential pressure type gas/vapor permeability measuring apparatus

### <Oxygen permeability>

The oxygen permeability was measured using an oxygen gas permeability measuring apparatus under the conditions of a temperature of 40°C and a humidity of 90% RH in accordance with JIS K 7126-2: 2006 (Plastic-Film and Sheet-Test Methods for Gas Permeability-Part 2: Equal Pressure Method, Appendix A: Test Methods for Oxygen Gas Permeability by Electrolytic Sensor Method). As the oxygen gas permeability measuring apparatus, OXTRAN 2/22 manufactured by MOCON Corporation was used. The water-impermeable degassing film was mounted in the apparatus such that a surface of the water-impermeable degassing film was in contact with oxygen gas, and the measurement was performed under the condition of a transmission area of 50 cm². The measurement was performed by the following procedure. First, carrier gas is supplied into the apparatus at a flow rate of 10 cc/min for 60 minutes or more to perform purge. As the carrier gas, nitrogen gas having a hydrogen content of about 5% was used. Test gas was fed into the apparatus, and a time of 12 hours was spent as a time until an equilibrium state was attained after the start of the feeding of the test gas, and the measurement was then started under the above-described temperature and humidity conditions. Dry oxygen having an oxygen content of at least 99.5% (volume) was used as the test gas. At least three samples were measured for one condition, and the average of the measured values was taken as a value of the oxygen permeability for the condition. It is to be noted that "200 <" in Table 1 represents an off-scale value for the oxygen gas permeability measuring apparatus, and means that the oxygen permeability was 200 cm³/(m²·24 h·atm) or more.

**[Table 1]**

| Table 1 | Laminated configuration of film parenthesized value is thickness (µm) | Water vapor permeability (60°C) cc/m²/day | Carbon dioxide permeability (60°C) cm³/(m²·24 h·atm) | Oxygen permeability (40°C) cm³/(m²·24 h·atm) |
|---|---|---|---|---|
| Example 1 | PPa (42)/polyarylate nonwoven fabric (14 g/m²)/PPa (42) | 4.13 | 39200 | 200 < |
| Comparative Example 1 | PPa (44)/PEN (12)/PPa (44) | 3.06 | 56 | 47 |
| Example 2 | PP (52.5)/CPP (95)/PPa (52.5) | 1.76 | 12700 | 200 < |
| Example 3 | PP (50)/CPP (50)/PPa (100) | 1.85 | 14100 | 200 < |
| Example 4 | PPa (40)/PP (40) | 6.51 | 57200 | 200 < |
| Example 5 | PPa (30)/PP (30)/PP (20) | 5.18 | 45000 | 200 < |

In Table 1, PPa indicates maleic anhydride-modified polypropylene, PP indicates polypropylene, PEN indicates polyethylene naphthalate, and CPP indicates an unstretched polypropylene film.

It can be seen that the films of Examples 1 to 5 include maleic anhydride-modified polypropylene as an adhesive layer, and a polyarylate nonwoven fabric, an unstretched polypropylene film or polypropylene as a base material layer, have a very low water vapor permeability and a high carbon dioxide permeability and oxygen permeability, and thus can be suitably used as water-impermeable degassing films.

As described above, the present disclosure provides inventions of aspects as described below.

Item 1. A water-impermeable degassing film which is bonded to a surface of an exterior material of an electrical storage device so as to block a communication portion provided in the exterior material, and is used to discharge gas generated inside the electrical storage device from the communication portion, in which the water-impermeable degassing film includes a laminate including at least a base material layer and an adhesive layer, and the adhesive layer of the water-impermeable degassing film is bonded to the surface of the exterior material of the electrical storage device.

Item 2. The water-impermeable degassing film according to item 1, in which the surface of the exterior material is formed of metal or resin.

Item 3. The water-impermeable degassing film according to item 1 or 2, in which the communication portion is provided on a bottom surface, a side surface or a weld portion of the electrical storage device.

Item 4. The water-impermeable degassing film according to any one of items 1 to 3, in which the communication portion has a circular shape or a slit shape.

Item 5. A water-impermeable degassing film which is disposed so as to be interposed between weld portions of an exterior material of an electrical storage device, and is used to discharge gas generated inside the electrical storage device, in which
the water-impermeable degassing film includes a laminate including at least a base material layer and an adhesive layer,
the adhesive layer of the water-impermeable degassing film is bonded to the weld portions of the exterior material, and
the gas is discharged by passing through the water-impermeable degassing film in a thickness direction thereof.

Item 6. The water-impermeable degassing film according to item 5, in which between the weld portions of the exterior material of the electrical storage device, the water-impermeable degassing film is sandwiched in a folded shape between the weld portions of the exterior material.

Item 7. The water-impermeable degassing film according to item 5 or 6, in which the exterior material includes a laminate including at least a base material layer, a barrier layer and a heat-sealable resin layer in this order, and
the water-impermeable degassing film is disposed so as to be interposed between the weld portions with the heat-sealable resin layer being bonded to the adhesive layer of the water-impermeable degassing film in the weld portion of the exterior material.

Item 8. The water-impermeable degassing film according to any one of items 5 to 7, in which the weld portion of the exterior material is provided with a communication portion in which a surface of the water-impermeable degassing film is exposed, and
the gas is discharged through the communication portion.

Item 9. The water-impermeable degassing film according to item 8, in which the communication portion has a circular shape or a slit shape.

Item 10. The water-impermeable degassing film 1 according to any one of items 1 to 9, in which the water-impermeable degassing film further includes at least one resin layer on a surface of the adhesive layer on the base material layer side.

Item 11. The water-impermeable degassing film according to any one of items 1 to 10, in which the water-impermeable degassing film is formed of polyolefin-based resin.

### DESCRIPTION OF REFERENCE SIGNS

1: Water-impermeable degassing film
2: Terminal
3: Exterior material
3a: Peripheral edge portion of exterior material
4: Electrical storage device element
10: Electrical storage device
11: Base material layer
12: Adhesive layer
13: Resin layer
14: Resin layer
31: Base material layer
32: Adhesive agent layer
33: Barrier layer
34: Adhesive layer
35: Heat-sealable resin layer
H: Communication portion
HS: Heat-sealing portion

## Claims

1. A water-impermeable degassing film which is bonded to a surface of an exterior material of an electrical storage device so as to block a communication portion provided in the exterior material, and is used to discharge gas generated inside the electrical storage device from the communication portion, wherein the water-impermeable degassing film comprises a laminate including at least a base material layer and an adhesive layer, and the adhesive layer of the water-impermeable degassing film is bonded to the surface of the exterior material of the electrical storage device.

2. The water-impermeable degassing film according to claim 1, wherein the surface of the exterior material is formed of metal or resin.

3. The water-impermeable degassing film according to claim 1 or 2, wherein the communication portion is provided on a bottom surface, a side surface or a weld portion of the electrical storage device.

4. The water-impermeable degassing film according to claim 1 or 2, wherein the communication portion has a circular shape or a slit shape.

5. A water-impermeable degassing film which is disposed so as to be interposed between weld portions of an exterior material of an electrical storage device, and is used to discharge gas generated inside the electrical storage device, wherein
the water-impermeable degassing film comprises a laminate including at least a base material layer and an adhesive layer,
the adhesive layer of the water-impermeable degassing film is bonded to the weld portion of the exterior material, and
the gas is discharged by passing through the water-impermeable degassing film in a thickness direction thereof.

6. The water-impermeable degassing film according to claim 5, wherein between the weld portions of the exterior material of the electrical storage device, the water-impermeable degassing film is sandwiched in a folded shape between the weld portions of the exterior material.

7. The water-impermeable degassing film according to claim 5 or 6, wherein the exterior material includes a laminate including at least a base material layer, a barrier layer and a heat-sealable resin layer in this order, and
the water-impermeable degassing film is disposed so as to be interposed between the weld portions with the heat-sealable resin layer being bonded to the adhesive layer of the water-impermeable degassing film in the weld portion of the exterior material.

8. The water-impermeable degassing film according to claim 5 or 6, wherein the weld portion of the exterior material is provided with a communication portion in which a surface of the water-impermeable degassing film is exposed, and
the gas is discharged through the communication portion.

9. The water-impermeable degassing film according to claim 8, wherein the communication portion has a circular shape or a slit shape.

10. The water-impermeable degassing film 1 according to claim 1 or 5, wherein the water-impermeable degassing film further includes at least one resin layer on a surface of the adhesive layer on the base material layer side.

11. The water-impermeable degassing film according to claim 1 or 5, wherein the water-impermeable degassing film is formed of polyolefin-based resin.
